# EUROPEAN PATENT APPLICATION

(11) **EP 3 622 844 A1**
(43) Date of publication of application: **18.03.2020**
(21) Application number: 18194484.4
(22) Date of filing: 14.09.2018
(51) Int. Cl.: A43B 23/02, A43B 1/04, B29D 35/12, D04H 3/14

(54) **METHOD FOR PROVIDING A FOOTWEAR UPPER**

(71) Applicant: Low & Bonar B.V., 6827 AV Arnhem (NL)
(72) Inventor: de Groot, Joris, 6827 AV Arnhem (NL)
(74) Representative: CPW GmbH

(57) **Abstract**

**Summary of the invention:**

A method is provided for providing an upper for an article of footwear comprising the steps of supplying a blank comprising at least one fibrous layer comprising filaments, heating the blank to a temperature above the glass transition temperature of the blank and shaping the blank into an upper without seams.

## Description

The invention pertains to a process for providing an upper for an article of footwear, to an upper for an article of footwear and to an article of footwear comprising such an upper.

An upper is the entire part of an article of footwear, such as a shoe, which covers the foot of the person wearing the article of footwear, and generally comprises a heel section, a lateral side section, a medial side section, an instep and a toe section.

Processes for providing an upper for an article of footwear can be complex and labour intensive as a conventional upper may be constructed from multiple individual pieces of material, for example by stitching the individual pieces of material together to form the upper. The end result is an article of footwear comprising an upper having multiple seams. Seams, which are friction points, can be located throughout the upper, such as for example in the heel section and/or in the toe section, which can be a discomfort for the person wearing the article of footwear.

Furthermore, seams have to be additionally treated to make the seams water resistant to ensure that the feet of the person wearing the article of footwear remain dry under moist or wet conditions, for example when it rains.

It is therefore an object of the invention to provide a simplified process for providing an upper for an article of footwear. It is another object of the invention to provide an upper for an article of footwear providing improved comfort.

The object of the invention is achieved by the process according to claim 1.

The method comprising the steps of supplying a blank comprising at least one fibrous layer comprising filaments, heating the blank and thermoforming the blank into an upper provides a simplified process for providing an upper for an article of footwear.

In an embodiment, the method comprising the steps of supplying a blank comprising at least one fibrous layer comprising filaments, heating the blank and thermoforming the blank into an upper having a reduced number of seams. Preferably, the method enables to provide an upper for an article of footwear composed of a single piece of material, i.e. not comprising seams. As the upper composed of a single piece of material is an upper without seams, the comfort for the person wearing the article of footwear is improved. Furthermore, water or moisture penetrating through the upper is prevented, or at least reduced, due to the absence of seams.

The at least one fibrous layer comprising filaments comprised in the blank may be a woven fabric, an unidirectional layer of filaments, a stack of multiple layers of unidirectional of filaments, or a nonwoven.

Within the scope of the present invention it is understood that the term filaments refers to fibers having a length of more than 200 mm, preferably more than 500 mm, more preferably more than 1000 mm. Filaments may even be virtually endless, for example when formed by continuous extrusion and spinning of a filament through a spinning hole in a spinneret.

The filaments may have any cross sectional shape, including round, trilobal, multilobal or rectangular, the latter exhibiting a width and a height wherein the width may be considerably larger than the height, so that the filament in this embodiment is a tape.

In a preferred embodiment, the at least one fibrous layer comprising filaments comprised in the blank is a nonwoven.

In an embodiment, the nonwoven comprised in the blank may be composed of a single type of mono-component filaments, which are bonded by any suitable bonding technique, such as for example by calendering the web of filaments between two calender rolls, by bonding the web of filaments in a double belt press, by mechanical needling, by hydroentanglement, by ultrasonic bonding or by any combination thereof.

In another embodiment, the nonwoven comprised in the blank may be comprise at least two different types of mono-component filaments, each type of mono-component filaments being composed of a polymer of different chemical construction and/or having a different melting point. The nonwoven may comprise two, three or more different types of mono-component filaments. Preferably, the nonwoven consists of two different types of mono-component filaments. It is preferred that the melting points of the two different polymers in the different types of filaments differ by at least 10°C. More preferably the melting points differ by at least 50°C. Such a nonwoven layer could be thermally bonded by subjecting the web of fibers to a temperature in the range of the melting point of the polymer with the lower melting point, preferably by hot air bonding.

The melting point of a polymer is determined by Differential Scanning Calorimetry by heating the polymer at a rate of 10°C per minute from 0°C to a temperature where the polymer has completely melted, e.g. to a temperature of 300°C. The melting temperature of the polymer is defined by the temperature at the maximum of the endothermic melting peak.

In an embodiment, the nonwoven comprises bicomponent filaments, preferably selected from the group consisting of side-by-side, segmented pie, islands-in-the-sea and core/sheath filaments, each component of the bicomponent filaments being composed of a polymer of different chemical construction and/or having a different melting point. Bicomponent filaments enable to thermally bond the nonwoven, preferably by hot air bonding. It is preferred that the melting points of the two different polymers in the bicomponent filaments differ by at least 10°C. More preferably the melting points differ by at least 50°C. Such a nonwoven layer could be thermally bonded by subjecting the web of fibers to a temperature in the range of the melting point of the polymer with the lower melting point.

Preferably, the nonwoven comprises bicomponent core/sheath filaments, which enables to obtain a bonding point at each crossing point of filaments.

In an embodiment, the nonwoven is composed for at least 50 wt.% of filaments, preferably for at least 75 wt.% of filaments, more preferably for at least 90 wt.% of filaments. In a preferred embodiment, the nonwoven consists of filaments.

A nonwoven composed of filaments may be produced by well-known spunbonding processes wherein filaments are extruded from a spinneret, stretched by an air flow and laid down on a conveyor belt as a web of filaments and subsequently consolidated, also known as bonding, the web to form a nonwoven layer of fibers, or by a two-step process wherein filaments are spun, mechanically stretched and wound on bobbins, preferably in the form of multifilament yarns, followed by the step of unwinding the filaments or multifilament yarns and laying the filaments down on a conveyor belt as a web of filaments and consolidating the web to form a nonwoven layer of fibers.

In a preferred embodiment, the nonwoven composed of filaments is produced by a two-step process wherein filaments are spun and wound on bobbins, preferably in the form of multifilament yarns, followed by the step of unwinding the filaments or multifilament yarns and laying the filaments down on a conveyor belt as a web of filaments and consolidating the web to form a nonwoven layer of fibers. This two-step process enables to provide a nonwoven having improved isotropy, i.e. having almost equal mechanical properties, in the machine direction, in cross machine direction and/or in the diagonal direction, i.e. at an angle of 45° to both the machine direction and the cross machine direction. In particular, the two-step process enables to provide a nonwoven having a high isotropy with respect to strength at break, elongation at break and modulus. The strength at break, elongation at break and modulus, wherein the modulus is determined as the load at specified elongation of 2% (LASE2%), are determined in accordance with EN29073-3 (08-1992) with a clamp speed of 200 mm/min at a temperature of 20°C.

Preferably, the nonwoven composed of filaments has a ratio of strength at break in machine direction to strength at break in cross machine direction of 1.5 or less, more preferably 1.25 or less, most preferably 1.1 or less and/or a ratio of strength at break in machine direction to strength at break in diagonal direction of 1.5 or less, more preferably 1.25 or less, most preferably 1.1 or less.

Shaping of the blank into the upper is preferably performed by clamping the blank into a frame, heating the blank to a temperature above the glass transition temperature of the blank and pressing a mould having the shape of a foot into the blank. The term heating the blank to a temperature above the glass transition temperature of the blank is understood the mean that the blank is heated at least to a temperature above the glass transition temperature of the at least one fibrous layer comprising filaments, preferably to a temperature above the glass transition temperature of all the materials comprised in the blank.

The method for providing an upper for an article of footwear comprising the steps of supplying a blank comprising at least one fibrous layer comprising filaments, heating the blank to a temperature above the glass transition temperature of the blank and shaping the blank into an upper without seams enables to provide custom made upper by pressing a mould having the shape of the foot of the person intended to wear the article of footwear into the blank.

The embodiment, wherein the fibrous layer comprising filaments comprised in the blank is a nonwoven, enables that shaping of the blank into the upper can be performed without applying a counter mould as the nonwoven may be shaped in machine direction, cross machine direction and in diagonal direction as a nonwoven is less sensitive to filaments being displaced to such an extent that holes are formed in the upper as compared to a woven fabric, an unidirectional layer of filaments or a stack of multiple layers of unidirectional of filaments. Applying a counter mould may cause the blank to be densified during shaping of the blank into an upper, which decreases the air permeability of the upper.

In an embodiment, wherein the fibrous layer comprising filaments comprised in the blank is a woven fabric, an unidirectional layer of filaments or a stack of multiple layers of unidirectional of filaments, shaping of the blank into the upper can be performed with applying a counter mould to prevent filaments being displaced to such an extent that holes are formed in the upper.

The embodiment, wherein the nonwoven comprised in the blank comprising filaments has a ratio of strength at break in machine direction to strength at break in cross machine direction of 1.5 or less, more preferably 1.25 or less, most preferably 1.1 or less and/or wherein the nonwoven composed of filaments has a ratio of strength at break in machine direction to strength at break in diagonal direction of 1.5 or less, more preferably 1.25 or less, most preferably 1.1 or less, enables that shaping of the blank into the upper can be performed using a fixed frame, i.e. it is not required to yield the blank at any time during shaping into the upper. Yielding of the blank is understood to mean that during the step of shaping the blank into the upper the frame holding the blank is configured to allow the blank to move in the direction where the blank is subjected to the highest deformation.

Preferably, the nonwoven comprised in the blank comprising filaments has an elongation at break of at least 50%, more preferably at least 70%, as determined in accordance with EN29073-3 (08-1992) with a clamp speed of 200 mm/min at a temperature of 20°C.

The two-step process also enables to provide filaments having a high linear density (dtex, which is understood to be the weight in grams per 10000 m of filament) which have been mechanically stretched at high draw ratios. In conventional spunbonding processes the extruded filaments are stretched by an air flow. However, obtaining high draw ratios in the extruded filaments to obtain higher modulus and/or breaking strength in the filaments is not possible as the amount of drag applied by the air flow onto the extruded filaments is limited. The two-step process enables to mechanically stretch extruded filaments in order to increase the modulus and/or breaking strength in the filaments, in particular at higher linear densities.

Preferably, the filaments comprised in the nonwoven comprising filaments have a linear density of at least 5 dtex, more preferably at least 7 dtex, even more preferably at least 10 dtex, most preferably at least 15 dtex.

The blank comprising at least one fibrous layer comprising filaments also provides air permeability to the upper which allows heat, such as for example originating from the foot of the person wearing the article of footwear, to be transferred to the outside of the article of footwear.

The blank comprising at least one fibrous layer comprising filaments may comprise one or more polymeric films, in particular for reinforcement of the upper and/or for decorative purposes. Each of the one or more polymeric films may be an air permeable film to ensure that the upper remains air permeable to allow heat to be transferred from the inside to the outside of the article of footwear. Preferably, the polymeric film is water impermeable to avoid moisture, such as for example rain, from penetrating through the upper into the article of footwear.

In an embodiment, the polymeric film may be adhered to the at least one fibrous layer comprising filaments during shaping of the blank into an upper.

In another embodiment, the polymeric film may be adhered by any suitable method to the at least one fibrous layer comprising filaments before shaping the blank into an upper without seams. The polymeric film may be adhered to the at least one fibrous layer comprising filaments by any suitable bonding technique, such as for example by calendering between two calender rolls, by bonding in a double belt press, by mechanical needling, by hydroentanglement, by ultrasonic bonding or by any combination thereof.

The blank comprising at least one fibrous layer comprising filaments may comprise one or more further nonwovens, woven fabrics, layers comprising tapes and/or powder, in particular for reinforcement of the upper and/or for decorative purposes. Each of the one or more further nonwovens, woven fabrics and/or layer comprising tapes may be an air permeable to ensure that the upper remains air permeable to allow heat to be transferred from the inside to the outside of the article of footwear. Preferably, the further nonwoven, woven fabric and/or layer comprising tapes is water impermeable to avoid moisture, such as for example rain, from penetrating through the upper into the article of footwear.

In an embodiment, the nonwoven, woven fabric and/or layer comprising tapes may be adhered to the at least one fibrous layer comprising filaments during shaping of the blank into an upper.

In another embodiment, the nonwoven, woven fabric and/or layer comprising tapes may be adhered by any suitable method to the at least one fibrous layer comprising filaments before shaping the blank into an upper without seams. The nonwoven, woven fabric and/or layer comprising tapes may be adhered to the at least one fibrous layer comprising filaments by any suitable bonding technique, such as for example by calendering between two calender rolls, by bonding in a double belt press, by mechanical needling, by hydroentanglement, by ultrasonic bonding or by any combination thereof.

In an embodiment, the blank comprises at least one fibrous layer comprising filaments and pile yarns tufted into the at least one fibrous layer comprising filaments. The process of tufting the steps of providing at least one fibrous layer comprising filaments into a tufting machine, tufting the at least one fibrous layer comprising filaments with pile yarns, also known as tufting yarns, to obtain a tufted fibrous layer a first side showing tufts and a second side where back stitches are formed. A tuft is the visible part of the tufting yarn extending from the first side of the tufted fibrous layer. A back stitch is the visible part of the tuft yarn laying directly on the surface on the second side of the tufted fibrous layer.

The pile yarns tufted into the at least one fibrous layer comprising filaments may be formed by a cut-pile tufting process, by a loop-pile tufting process, or a combination thereof.

The tufting direction may be in the direction from the lateral side to the medial side of the upper, in the direction from the heel to the toe section of the upper, diagonally, or at any other angle, between the direction from the lateral side to the medial side of the upper and the direction from the heel to the toe section of the upper.

The blank comprising at least one fibrous layer comprising filaments and pile yarns tufted into the at least one fibrous layer comprising filaments, enables to provide an upper for an article of footwear which provides improved comfort for the person wearing the article of footwear. When the article of footwear comprises an upper wherein the tufts of the tufting yarns are extending from the upper towards the inside of the article of footwear, i.e. towards foot of the person wearing the article of footwear, the person will experience increased comfort.

When the tufts of the tufting yarns are extending from the upper to the outside of the article of footwear, the blank comprising at least one fibrous layer comprising filaments and pile yarns tufted into the at least one fibrous layer comprising filaments enables to provide an upper which can be provided with any desired pattern, in particular by tufting the at least one fibrous layer comprising filaments with tufting yarns having different colors, having different linear densities, having different length, i.e. extending from the first side of the of the tufted fibrous layer to different heights, and/or being composed of different materials.

In an embodiment, the blank comprising at least one fibrous layer comprising filaments and pile yarns tufted into the at least one fibrous layer comprising filaments, may comprise one or more rows of tufting yarns and adjacent sections which do not comprise tufting yarns, for example to enable incorporation of eyelets for shoe laces in the sections which do not comprise tufting yarns and/or to provide a desirable pattern.

The blank may contain cut outs which after shaping of the blank into an upper enhance the fit of the upper, thus providing improved comfort for the person wearing the article of footwear, and/or for decorative purposes.

The article of footwear may also comprise an insole which comprises at least one fibrous layer comprising filaments and pile yarns tufted into the at least one fibrous layer comprising filaments to further improve the comfort for the person wearing the article of footwear as the bottom side of the feet of the person are in contact with the pile yarns.

## Claims

1. A method for providing an upper for an article of footwear comprising the steps of supplying a blank comprising at least one fibrous layer comprising filaments, heating the blank to a temperature above the glass transition temperature of the blank and shaping the blank into an upper.

2. The method according to claim 1, wherein the at least one fibrous layer comprising filaments is a nonwoven.

3. The method according to claim 2, wherein the nonwoven comprises a first type of monocomponent filaments and a second type of mono-component filaments, each type of mono-component filaments being composed of a polymer of different chemical construction and/or having a different melting point.

4. The method according to claim 2, wherein the nonwoven comprises bicomponent filaments, preferably core/sheath filaments.

5. The method according to any of the previous claims wherein the blank further comprises one or more polymeric films.

6. The method according to any of the previous claims wherein the method comprises the step of shaping the blank into an upper without applying a counter mould.

7. The method according to any of claims 2 to 6 wherein the nonwoven is produced by a two-step process wherein filaments are spun, mechanically stretched and wound on bobbins, preferably in the form of multifilament yarns, followed by the step of unwinding the filaments or multifilament yarns and laying the filaments down on a conveyor belt as a web of filaments and consolidating the web to form a nonwoven layer of fibers.

8. The method according to any of the previous claims wherein the method comprises the step of tufting pile yarns into the at least one fibrous layer comprising filaments.

9. The method according to any of the previous claims wherein the method comprises the step of shaping the blank into an upper without seams.

10. An upper for an article of footwear obtainable by the method according to any of the previous claims comprising at least one fibrous layer comprising filaments.

11. The upper according to claim 10 wherein the at least one fibrous layer comprising filaments is a nonwoven.

12. The upper according to claim 11 wherein the nonwoven is produced by a two-step process wherein filaments are spun, mechanically stretched and wound on bobbins, preferably in the form of multifilament yarns, followed by the step of unwinding the filaments or multifilament yarns and laying the filaments down on a conveyor belt as a web of filaments and consolidating the web to form a nonwoven layer of fibers.

13. The upper according to any of claims 10 to 12 wherein the upper comprises pile yarns tufted into the at least one fibrous layer comprising filaments.

14. An article of footwear comprising a sole structure and an upper secured to the sole structure, wherein the upper is an upper according to any of claims 10 to 13.

15. The article of footwear according to claim 14 wherein the upper comprises tufts of tufting yarns which extend from the upper towards the inside of the article of footwear or wherein the upper comprises tufts of tufting yarns which extend from the upper to the outside of the article of footwear.
